# EUROPÄISCHE PATENTSCHRIFT

(11) **EP 0 394 503 B1**
(45) Veröffentlichungstag und Bekanntmachung des Hinweises auf die Patenterteilung: **31.08.1994**
(21) Anmeldenummer: 89107275.3
(22) Anmeldetag: 21.04.1989
(51) Int. Cl.: G06F 15/72

(54) **Verfahren und Gerät zur Erstellung eines Layouts**
Method and device for the generation of a layout
Méthode et appareil pour la génération d'un tracé

(43) Veröffentlichungstag der Anmeldung: 31.10.1990
(73) Patentinhaber: CICERO GmbH Rhein Rechenzentrum, 56070 Koblenz (DE)
(72) Erfinder: Schuster, Michael, D-5400 Koblenz/Arenberg (DE)
(74) Vertreter: Tiedtke, Harro, Dipl.-Ing.

(56) Entgegenhaltungen:
- EP-A- 0 285 449
- COMPUTER DESIGN, Band 23, Nr. 12, 15. Oktober 1984, Seiten 141-144,146,147,Littleton, Massachusetts, US; R.S.M. WULFF: "Multiple micros distribute textand graphics functions"
- IEEE COMPINT - COMPUTER AIDED TECHNOLOGIES, Montreal, Quebec, Canada, 9th-13thSeptember 1985, Seiten 177-182, IEEE; T. SAKAI: "Computer generated images anddrawings for industrial applications"

## Beschreibung

Die Erfindung betrifft ein Verfahren und ein Gerät zur Erstellung eines Layouts, d.h. einer Gestaltungsvorschrift für eine Seite, insbesondere zum Einsatz beim Fertigungsschritt "Layouten" bei der Zeitungsproduktion.

Unter Layouten wird die Festlegung der Gestaltung einer Seite einer Zeitung, eines Prospekts, einer Werbebroschüre und dgl. verstanden.

Bei den derzeitigen Fertigungsverfahren zeichnet der Mensch (Redakteur) mit Hilfsmitteln wie Papier, Bleistift oder einer grafikfähigen Workstation das Layout.

Beim Arbeiten mit Papierlayout malt der Layouter auf Millimeterpapier das Seitenlayout auf. Damit legt er die Position und die Größe der einzelnen Elemente fest. Unter dem Begriff "Element" werden hierbei und im folgenden die einzelnen Informationsblöcke der zu gestaltenden Seite wie Textartikel, Anzeigen oder Bilder verstanden.

In der Seitenmontage, d.h. in dem Produktionsabschnitt, in dem die einzelnen Elemente zu einer Seite nach einer Layoutvorlage zusammenmontiert werden, werden dann die einzelnen Elemente nach dem Layoutplan zu einer Seite zusammengeklebt.

Beim Arbeiten mit elektronischem Layout wird das Layout mit Unterstützung einer graphikfähigen Workstation gemalt. Dadurch werden die Gestaltung, Größe und die Position der Einzelelemente festgelegt.

Die Ausgabe einer elektronisch erstellten Layoutseite erfolgt dann auf einer Ganzseitenbelichtungsmaschine. Damit fällt der Fertigungsschritt Seitenmontage weg.

Aus EP-A-0 285 449 (TOSHIBA) geht hervor, daß Textverarbeitungssysteme vorhanden sind, die Text und graphische Elemente zusammenstellen können, ohne daß auf dem Layout Platz für die graphischen Elemente durch einen Bediener reserviert werden muß.
COMPUTER DESIGN, Band 23, Nr. 12, 15. Oktober 1984, Seiten 141-144, 146, 147, Littleton, Massachusetts, US; R.S.M. WULFF: "Multiple micros distribute text and graphics functions": in diesem Dokument wird ein Textverarbeitungssystem beschrieben. Ein Seitenerstellungsverfahren wird lediglich erwähnt, nach dem Bilder-, Styl- und Textinformationen zur Erstellung eines Layouts kombiniert werden.

Der Erfindung liegt die Aufgabe zugrunde, eine Verfahren und ein Gerät zur Erstellung eines Layouts zu schaffen, bei dem die Layout-Erstellung automatisiert in rascher und kostengünstiger Weise erfolgen kann.

Zur Lösung dieser Aufgabe wird ein Verfahren zur automatischen Erstellung eines Layouts einer zu gestaltenden Seite angegeben, dadurch gekennzeichnet, daß die in Form charakteristischer Kenngrößen eingegebenen Elemente der zu gestaltenden Seite mit gespeicherten, aus mehreren Layouts vorab gewonnenen charakteristischen Kenngrößen verglichen werden und daß abhängig vom Vergleichsergebnis ein Layout erstellt wird, in dem die Elemente entsprechend der Häufigkeit ihrer Anordnung in den zur Gewinnung der gespeicherten Kenngrößen ausgewerteten Layouts auf der zu gestaltenden Seite positioniert sind.

Das erstellte Layout kann angezeigt werden, so daß der Benutzer eine optische Kontrolle besitzt.

Bei Eingabe eines Bestätigungsbefehls seitens des Benutzers nach Erstellung des Layouts können die charakteristischen Kenngrößen dieses neu erstellten Layouts gleichfalls für später zu erstellende Layouts gespeichert werden, so daß der Vorrat an gespeicherten Layouts kontinuierlich vergrößert wird.

Vorzugsweise können die charakteristischen Kenngrößen den Typus des jeweiligen Elements beinhalten und insbesondere repräsentieren, ob es sich bei dem jeweiligen Element um einen Textartikel, um eine Anzeige oder um ein Bild handelt.

Zusätzlich zu den gespeicherten charakteristischen Kenngrößen können Positionsinformationen gespeichert sein, die die Häufigkeit des Auftretens eines jeweiligen Elementtyps an einer bestimmten Stelle der Seite beinhalten.

In diesem Fall können die Elemente der zu gestaltenden Seiten abhängig von ihren eingegebenen charakteristischen Kenngrößen so positioniert werden, daß sie an der Stelle der gespeicherten maximalen Häufigkeit des Auftretens dieses Elements zu liegen kommen.

Hierbei wird vorzugsweise vor jeder Positionierung des jeweils betrachteten Elements überprüft, ob die ausgewählte Position in der zu gestaltenden Seite noch frei ist, und dann, wenn festgestellt wird, daß die ausgewählte Position bereits belegt ist, stattdessen diejenige Position bestimmt, bei der das betreffende Element die zweithöchste Häufigkeit seines Auftretens besitzt, und, falls auch diese Position in der zu gestaltenden Seite bereits belegt sein sollte, diejenige Position belegt, die in der zu gestaltenden Seite noch frei ist und von den freien Positionen die höchste Häufigkeit des Auftretens des Elements an dieser Stelle besitzt.

Weiterhin wird zur Lösung der genannten Aufgabe ein Gerät zur automatischen Erstellung eines Layouts einer zu gestaltenden Seite angegeben, das eine Eingabeeinrichtung, über die charakteristische Kenngrößen der auf der zu gestaltenden Seite anzuordnenden Elemente eingebbar sind, und einen Verarbeitungsabschnitt aufweist, der abhängig vom Vergleichsergebnis Zwischen den eingegebenen Kenngrößen und den in einem Speicher gespeicherten Kenngrößen bereits erstellter Layouts den Ort der maximalen Auftrittshäufigkeit des jeweiligen Elements ermittelt, und damit die räumliche Anordnung der eingegebene Elemente auf der zu gestaltenden Seite zu bestimmen.

Das Gerät weist vorzugsweise einen Anzeigeabschnitt auf, auf dem das durch den Verarbeitungsabschnitt erstellte Layout anzeigbar ist.

Vorteilhafterweise ist im Speicher eine dreidimensionale Positionsmatrix gespeichert, in der für jede Position der Seite und für jeden durch die charakteristischen Kenngrößen der Elemente charakterisierten Typus der Elemente die Häufigkeit des Auftretens des jeweiligen Typs an der jeweiligen Position, bezogen auf die bislang ausgewerteten Layouts, gespeichert sind.

Der Verarbeitungsabschnitt überprüft abhängig von den eingegebenen, für den Typ des jeweils zu positionierenden Elements charakteristischen Kenngrößen den Inhalt des Speichers hinsichtlich des Orts der maximalen Häufigkeit des Auftretens dieses Elementtyps und positioniert das betreffende Element an derjenigen Stelle der zu gestaltenden Seite, an der die maximale Auftrittshäufigkeit ermittelt wurde. Da lediglich der Speicherinhalt typenabhängig überprüft werden muß, kann die Positionierung sehr rasch erfolgen.

Um Mehrfachpositionierungen an derselben Position zu vermeiden, kann der Verarbeitungsabschnitt vor Positionierung des Elements an der Stelle von dessen maximaler Auftrittshäufigkeit überprüfen, ob die betreffende Position in der zu gestaltenden Seite noch frei ist und, wenn dies der Fall ist, das Element an der betreffenden Position anordnen, während er bei Ermittlung, daß die betreffende Position bereits durch ein anderes Element besetzt ist, die zweithöchste Häufigkeit des Auftretens des betreffenden Elementtyps ermittelt, überprüft, ob diese Position in der zu gestaltenden Seite noch frei ist und, wenn dies der Fall ist, das Element an dieser Position anordnet, während er bei Belegtsein auch dieser Position das Element an derjenigen Stelle der zu gestaltenden Seite anordnet, die in der zu gestaltenden Seite noch frei ist und von allen freien Stellen die höchste Auftrittshäufigkeit des betreffenden Elements besitzt.

Die charakteristischen Kenngrößen können zusätzlich Prioritäts-Kenndaten enthalten, die darstellen, ob das betreffende Element auf der zu gestaltenden Seite anzuordnen ist, angeordnet werden sollte oder angeordnet werden kann. Der Verarbeitungsabschnitt positioniert dann nach anfänglicher Anordnung aller Elemente, die angeordnet werden müssen, auf der zu gestaltenden Seite diejenigen Elemente, die angeordnet werden sollten, auf der zu gestaltenden Seite, soweit dies möglich ist, und, falls auch alle Elemente, die angeordnet werden sollten, auf der zu gestaltenden Seite untergebracht sind, auch diejenigen Elemente, die angeordnet werden können, auf der zu gestaltenden Seite, soweit möglich.

Erfindungsgemäß wird die Layout-Erstellung (Layouten) von einem lernenden System ausgeführt. Vereinfacht dargestellt werden verschiedene Layouts dem lernenden System gezeigt, daraus entwickelt das System Gestaltungsstrukturen, die dann die Basis für die Erstellung eines neuen Layouts bilden. Findet das erstellte Layout die Zustimmung des Redakteurs, dann aktualisiert das System die internen Darstellungsstrukturen usw.

Der Unterschied bzw. die Verfahrenserweiterung zu den herkömmlichen Layouttechniken besteht darin, daß das erfindungsgemäße System einen Layoutvorschlag erstellt.

Dazu ist es zunächst erforderlich, daß das erfindungsgemäße System in einer mathematischen Form (Gedächtnis) weiß, wie ein Layout aussehen sollte. Die mathematische Beschreibung geschieht durch Aufteilung der verschiedenen Elemente in Typen und deren Lage in der Layoutseite.

Auf dieser Basis verteilt das erfindungsgemäße System die beim Layouten ausgewählten Elemente auf die Seite. Ist der Benutzer mit diesem Layoutvorschlag einverstanden, wird das Gedächtnis aktualisiert.

Zusammenfassend überprüft das erfindungsgemäße Gerät, in das Informationen über den Typus der auf der aktuell zu erstellenden Seite unterzubringenden Elemente eingegeben sind, diesen eingegebenen Informationssatz mit in einem Speicher des Geräts gespeicherten Kenndaten von Layouts, berechnet ein Layout, das hinsichtlich der Art, Anzahl und Größe der Elemente dem eingegebenen Informationssatz am nächsten kommt und stellt das ausgewählte Layout optisch dar. Der Redakteur kann daraufhin das erstellte Layout auf seine Eignung für den aktuellen Druck überprüfen. Akzeptiert der Redakteur den Layout-Vorschlag, so kann er in das Gerät einen Befehl eingeben, durch den der dargebotene Layout-Vorschlag zusätzlich in den Speicher als akzeptiertes Layout aufgenommen wird. Der Umfang der gespeicherten Layouts wird folglich erhöht, so daß bei der nachfolgenden Anforderung eines Layout-Vorschlags unter Eingabe entsprechender Informationen über die auf der Seite unterzubringenden Elemente diese eingegebenen Informationen mit einem entsprechend vergrößerten Vorrat an gespeicherten Layouts verglichen werden können. Die Wahrscheinlichkeit eines dem Optimum nahekommenden Layout-Vorschlags erhöht sich dementsprechend sukzessive.

Aufgrund dieser Gestaltung kann die Erstellung eines Layouts sehr rasch und kostengünstig erfolgen, da lediglich die typisierte Eingabe von Informationen über die anzuordnenden Elemente erforderlich ist und das Gerät dann selbsttätig ein Layout erstellt. Selbst wenn der Redakteur mit dem Layout-Vorschlag nicht einverstanden sein sollte, ist ihm doch zumindest ein Rohkonzept an die Hand gegeben, von dem ausgehend er möglicherweise durch einfache Abänderungen dann zu der von ihm als optimal empfundenen Seitengestaltung in sehr kurzer Zeit und einfacher Weise gelangen kann. Nach Erstellung dieses modifizierten Layouts kann der Benutzer entsprechende Informationen über das modifizierte Layout in den Gerätespeicher eingeben, so daß dieser zukünftig auch dieses Layout bei der Erstellung des Layout-Vorschlags mitberücksichtigen kann.

Das erfindungsgemäße Gerät stellt somit ein lernendes System dar, das anstelle oder in Unterstützung des Redakteurs tätig sein kann.

Die Erfindung wird nachstehend anhand eines Ausführungsbeispiels unter Bezugnahme auf die Zeichnungen näher erläutert. Es zeigen:
- Fig. 1: ein schematisches Blockschaltbild eines Ausführungsbeispiels des erfindungsgemäßen Geräts,
- Fig. 2: eine Kriterienliste,
- Fig. 3: eine schematische Darstellung der räumlichen Lage von Elementen in der zu gestaltenden Seite und der entsprechenden Kriterien,
- Fig. 4: die Systemarchitektur des erfindungsgemäßen Systems,
- Fig. 5: den Ablaufplan eines Programmabschnitts "Generieren",
- Fig. 6: den Ablaufplan eines Programmabschnitts "Laden",
- Figuren 7A, 7B und 7C: den Ablaufplan eines Programms "Layouten",
- Fig. 8: den Aufbau einer in Fig. 4 gezeigten Liste SDARB,
- Fig. 9: den Aufbau einer in Fig. 4 gezeigten Typenliste TYPLIST,
- Fig. 10: den Aufbau einer in Fig. 4 gezeigten "Ladeliste" und
- Fig. 11: den Aufbau einer in Fig. 4 gezeigten Seitenlayoutliste SEITLAYOUT.

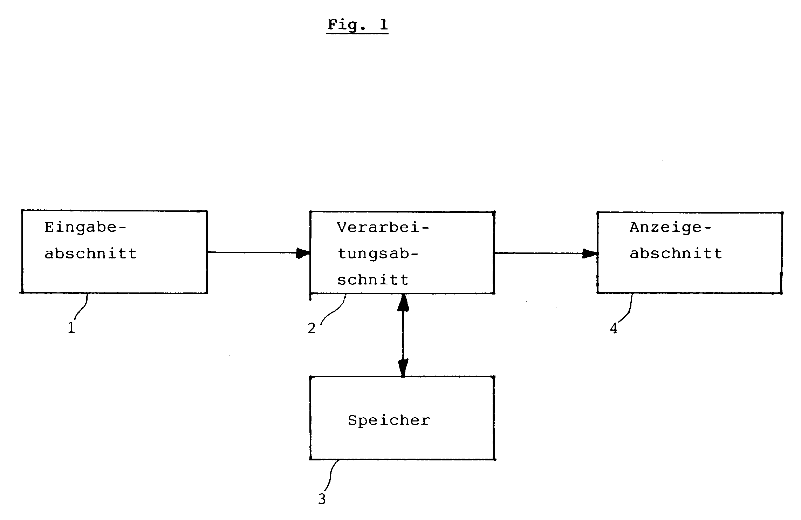

In Fig. 1 ist ein schematisches Blockschaltbild des erfindungsgemäßen Geräts zur Erstellung eines Layouts gezeigt. Über einen Eingabeabschnitt 1 kann der Benutzer, z.B. ein Redakteur, Informationen über die Art, Anzahl, Größe usw. der auf der zu gestaltenden Seite unterzubringenden Elemente eingeben. Ein Verarbeitungsabschnitt 2 verarbeitet die eingegebenen Informationen und vergleicht diese mit Layouts bzw. Layout-Kenndaten, die in einem Speicher 3 gespeichert sind. In dem Speicher 3 sind die Layouts hinsichtlich ihrer Kriterien wie Größe, Art der Elemente und dgl. mit den Parameterbezeichnungen gespeichert, wie sie auch für die Eingabe der Elementebezeichnungen bzw. -kriterien verwendet werden.

Der Verarbeitungsabschnitt 2 erstellt abhängig vom Inhalt des Speichers 3 ein Layout, dessen Elementeanordnung den eingegebenen Kriterien für die Elemente der aktuell zu gestaltenden Seite entspricht, und steuert einen Anzeigeabschnitt 4 zur Anzeige des erstellten Layouts.

Entspricht das auf dem Anzeigeabschnitt 4 dargestellte Layout den Wünschen des Benutzers, so kann dieser über den Eingabeabschnitt 1 einen Bestätigungsbefehl eingeben, bei dessen Empfang der Verarbeitungsabschnitt 2 die Daten für das modifizierte Layout als zusätzliches Layout im Speicher 3 abspeichert.

Zur Beschreibung des Layouts werden die verschiedenen Elemente in Typen unterteilt, denen jeweils eine Typenbezeichnung in Form einer Zahl zugeordnet ist. In gleicher Weise wird die Lage der Elemente in der Layoutseite durch Typenbezeichnungen in Form von Zahlen bezeichnet. Aus diesen Zahlen wird für ein jeweiliges Element ein Typenbezeichner TBZ gebildet.

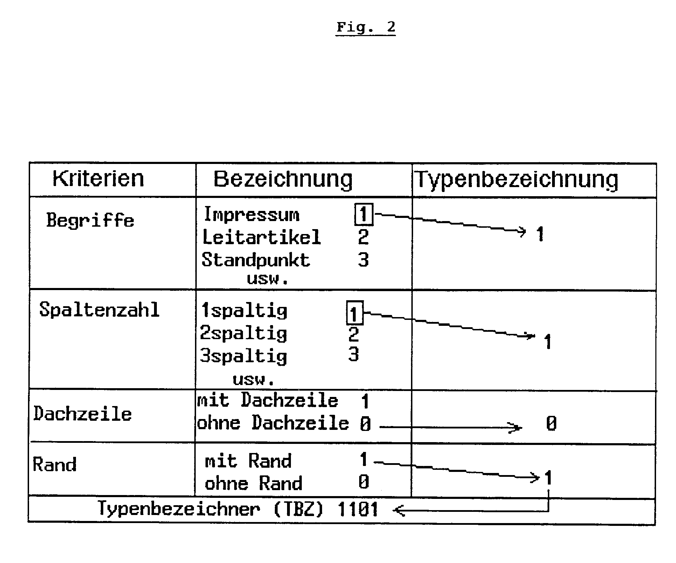

In Fig. 2 ist eine mögliche Liste von Kriterien für die Typisierung der Elemente (KRITLIST) dargestellt. Für jeden Elementtyp existiert somit ein Typenbezeichner, der sich aus der Wichtigkeit der einzelnen Kriterien ergibt.

Im dargestellten Beispiel ergibt sich ein Typenbezeichner TBZ=1101, der aussagt, daß es sich um ein Impressum handelt, das 1 spaltig, ohne Dachzeile, aber mit Rand gestaltet ist.

Zur Definition des Begriffs "Spalte" ist festzustellen, daß jede Zeitungsseite aus mehreren Spalten besteht und jede Spalte eine fest definierte Breite besitzt.

Das erfindungsgemäße Verfahren und System eignet sich aber nicht nur für die Gestaltung von Zeitungsseiten, sondern in gleicher Weise auch für die Layout-Erstellung von Werbeprospekten, Broschüren, Zeitschriften und dgl.

Der Speicher 3, d.h. das "Gedächtnis" wird erstmalig dadurch gefüllt, daß eine Seitenstichprobe von bereits produzierten Seiten ausgewählt wird. Die Elemente der Stichprobenseite werden dann typisiert und ihre Lage festgehalten. Durch Auszählung wird dann ermittelt, welcher Typ an welcher Stelle wie oft plaziert war. Die so ausgezählten Häufigkeiten bilden das "Gedächtnis", d.h. den Speicherinhalt. Diese Häufigkeitswerte repräsentieren die Gestaltung (Layout) der Zeitungsseiten.

Bei der Erstellung eines Layoutvorschlages wird vom erfindungsgemäßen Gerät versucht, die einzelnen Elementtypen nach der größten Häufigkeit zu plazieren. Gelingt dies nicht, da der Platz bereits belegt ist, nimmt das erfindungsgemäße Gerät die nächst kleinere Plazierungshäufigkeit usw.

Ein vom Benutzer akzeptierter Layoutvorschlag führt zu einem update dieser Plazierungshäufigkeiten. Dies ist die Lernphase.

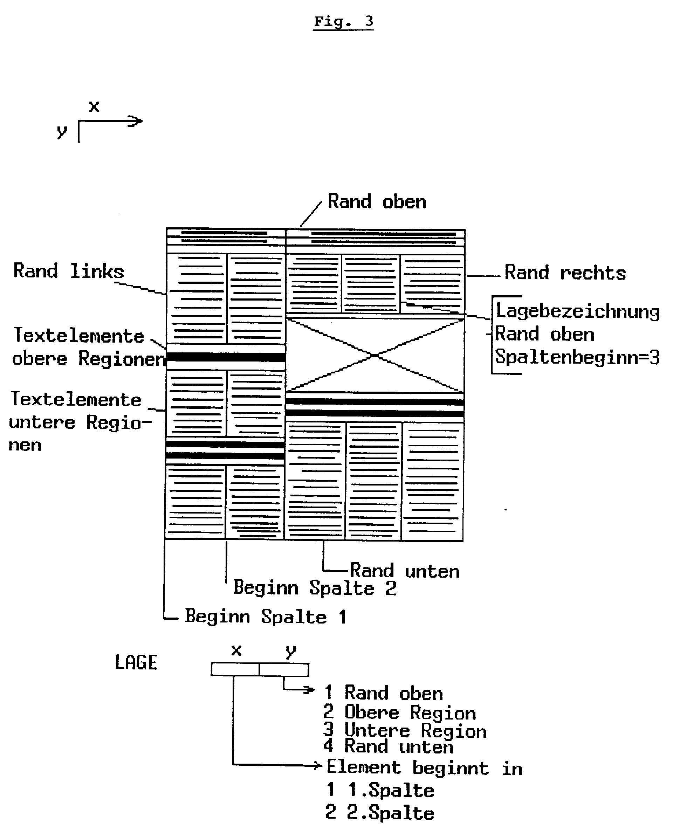

Die Kriterien für die Lage eines Elements in der Seite, zeigt Fig. 3.

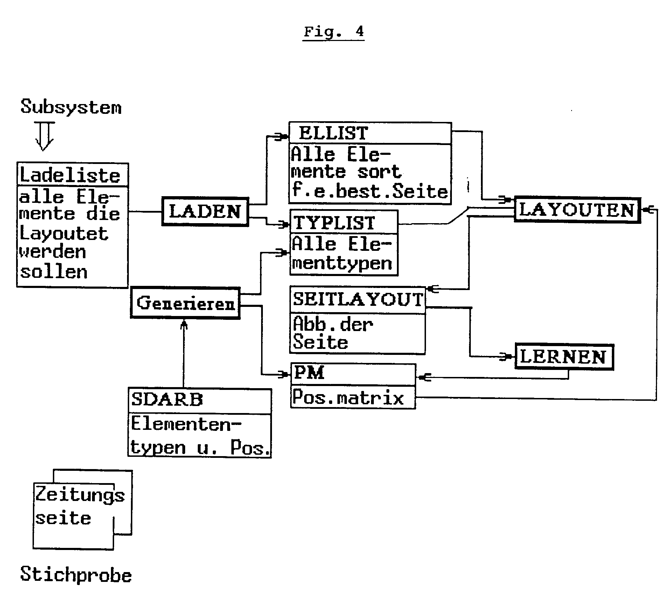

Fig. 4 zeigt die Systemarchitektur des erfindungsgemäßen Verfahrens und Geräts.

Sie besteht aus folgenden Programmen:

"GENERIEREN": erstmaliges Laden der Typenliste und der Positionsmatrix.

"LADEN": Speicherung aller zu verteilender Elemente in einer Matrix ELDAT und, falls erforderlich, Aufnahme eines neuen Elementtypes in eine Typenliste "TYPLIST".

"LAYOUTEN": Verteilen der Elemente aus der Elementmatrix ELDAT in das Seitenlayout "SEITLAYOUT". Die Verteilung der Elemente erfolgt nach der Verteilungshäufigkeit aus der Positionsmatrix.

"LERNEN": nach der Akzeptanz eines Layoutvorschlags durch den Benutzer, wird die Positionsmatrix aktualisiert.

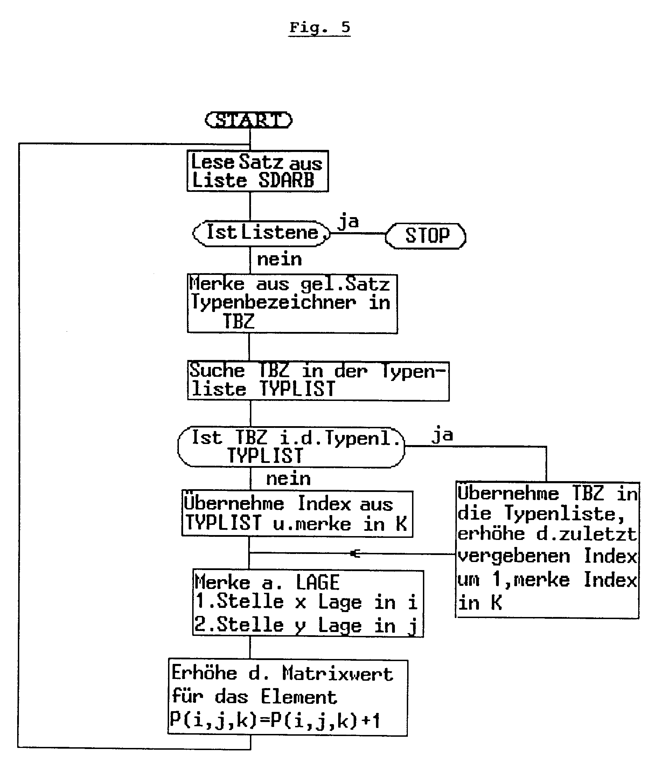

Mit dem in Fig. 5, auf deren Offenbarungsgehalt hiermit ausdrücklich verwiesen wird, naher gezeigten Programm "GENERIEREN" wird erstmalig das "Gedächtnis" erstellt. Basis bildet eine Stichprobe aus bereits produzierten Zeitungsseiten.

Aus der Stichprobe werden alle Elemente (siehe Kriterien liste, Fig. 2) typisiert. Zusätzlich wird ihre Position in der Seite bestimmt (siehe Kriterien für die Lage eines Elementes in der Seite, Fig. 3).

Die so gewonnenen Informationen werden über die Liste (file) SDARB dem Programm "GENERIEREN" zur Verarbeitung übergeben.

Die Dateneingabe erfolgt somit uber die Liste SDARB, die als sequentielle Liste ausgebildet ist und für jedes Element einen Typenbezeichner TBZ (siehe Kriterien gemäß Fig. 2) sowie Informationen über die Elementlage in Form eines x- und y-Werts (siehe Kriterien für die Elementlage gemäß Fig. 3) beinhaltet.

Die Datenausgabe erfolgt in die Typenliste "TYPLIST", die eine Liste aller Typen darstellt, wobei jeder Typ einen Index hat, der durchlaufend numeriert ist, sowie in die Positionsmatrix PM.

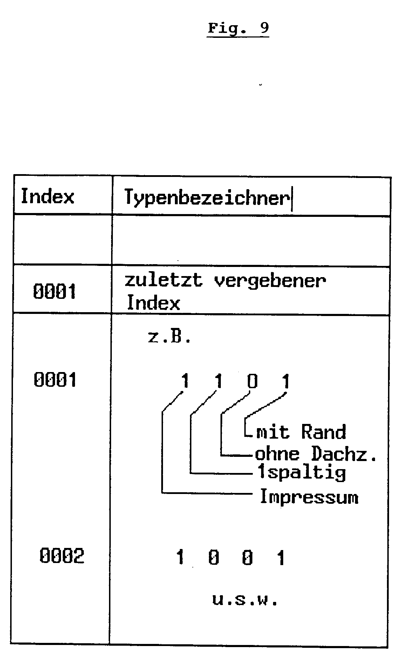

Der Aufbau der Typenliste ist in Fig. 9 im einzelnen gezeigt, auf deren Offenbarungsgehalt hiermit ausdrücklich verwiesen wird, während der Aufbau der Positionsmatrix PM im folgenden noch näher beschrieben wird.

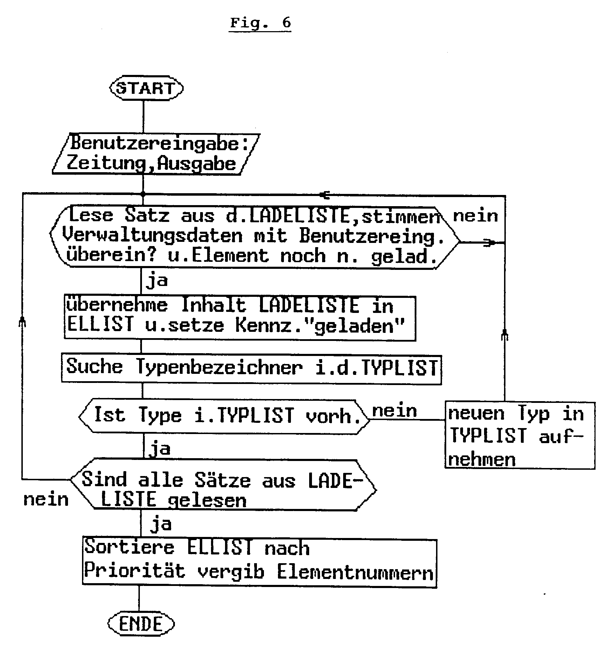

In Fig. 6 sind die einzelnen Schritte des Programms "LADEN" detailliert dargestellt. Auf den Offenbarungsgehalt von Fig. 6 wird hiermit ausdrücklich verwiesen.

Mit dem Programm "LADEN" werden die zum Layouten anstehenden Elemente aus einer Elementliste "ELLIST" übernommen. Die Elementliste wird von einem Subsystem (z.B. Redaktionssystem, Anzeigensystem) erstellt. Der Aufbau der Elementliste ELLIST wird im folgenden noch näher beschrieben.

Alle zum Layouten anstehenden Elemente werden nach ihrer Priorität sortiert. Dann wird für jedes Element aus der Typenliste TYPLIST der entsprechende Index gesucht, bzw., falls erforderlich, als neuer Typ aufgenommen.

Folgende Felder werden aus der Elementliste ELLIST in eine Elementmatrix ELDAT übernommen:
Priorität
Typenbezeichner
Maße
Verwaltungsdaten
- Zeitung
- Ausgabe
- Ressort
- Seite
- Erscheinungstag
- Zustand.

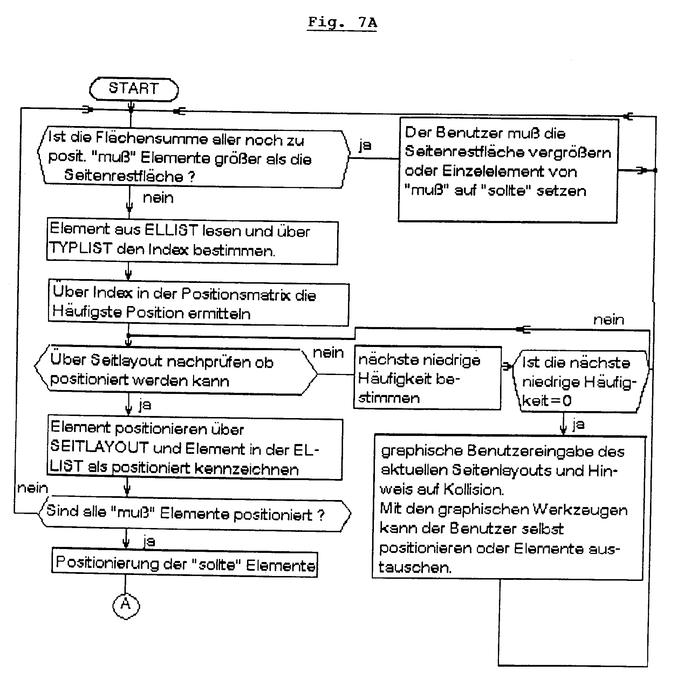

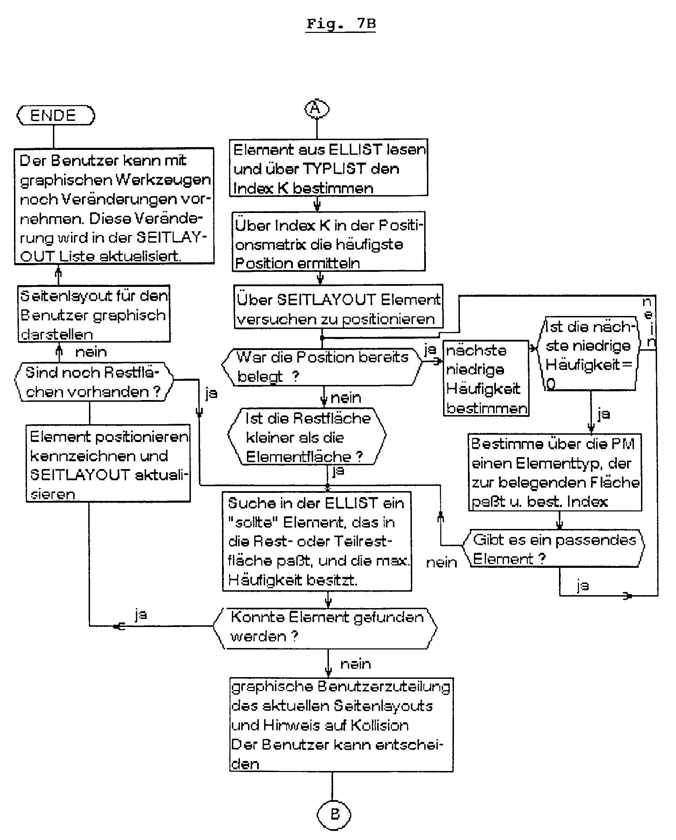

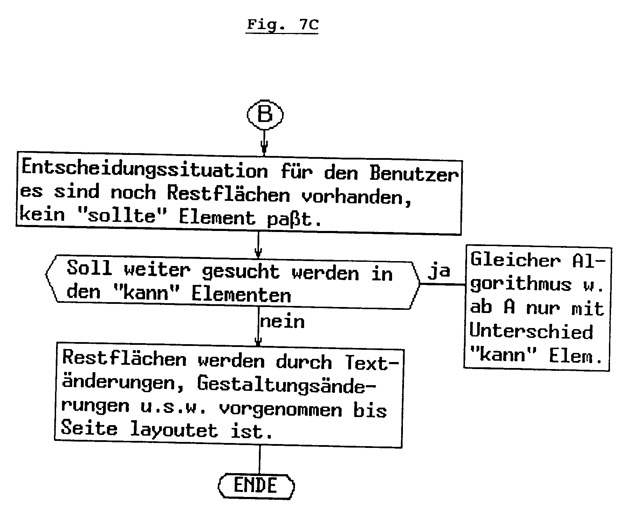

In den Fig. 7A, 7B und 7C sind die Schritte des Programms "LAYOUTEN" im Detail gezeigt und beschrieben. Auf den Offenbarungsgehalt der Fig. 7A, 7B, 7C wird hiermit ausdrücklich verwiesen.

Mit dem Programm LAYOUTEN werden die in der Elementliste (ELLIST) stehenden Elemente in die Seite verteilt (layoutet).d

Dazu sind folgende Schritte nötig:
Lesen eines Elements aus der Elementliste.
Über die Typenliste den Index K ermitteln.
Aus der Positionsmatrix über den Index K die häufigste Position ermitteln.

Dann wird überprüft, ob die Position im Seitenlayout noch frei ist. Wenn dies der Fall ist, wird das Element positioniert und die Seitenlayouteinträge (Position, Maße) werden aktualisiert. Weiterhin wird in der Elementliste das Kennzeichen gesetzt, daß dieses Element bereits layoutet ist.

Wenn die Position im Seitenlayout nicht mehr frei ist, wird in der Positionsmatrix die nächstniedrige Häufigkeit gesucht und diese Position darauf überprüft, ob sie noch frei ist. Abhängig vom Überprüfungsergebnis werden dann die gerade beschriebenen Vorgänge durchgeführt.

Bei der Verteilung können folgende Unstimmigkeiten auftreten:
1. Die Restfläche der Seite ist kleiner, als die in der Ladeliste mit "muß" gekennzeichneten Elemente. Hier muß der Benutzer entscheiden, siehe in Fig. 7A den entsprechenden Entscheidungsschritt.
2. Alle als "muß" gekennzeichneten Elemente sind positioniert, es ist aber noch Restfläche vorhanden. Das nächste als "sollte" gekennzeichnete Element ist zu groß für die Restfläche. Dann wird zunächst in den mit "sollte" gekennzeichneten Elementen die passende Größe gesucht, siehe Fig. 7B.
3. Wird in den mit "sollte" gekennzeichneten Elementen kein passendes Element gefunden, dann wird vom Benutzer eine Entscheidung verlangt. Er verändert die Größe des Elements, oder er läßt die mit "kann" gekennzeichneten Elemente durchsuchen.
4. Wird kein passendes Element im gesamten Bestand gefunden, muß der Benutzer ein Element auf die erforderliche Größe bringen, z.B. durch Bildvergrößern, -verkleinern, andere Überschriftsgrößen, Textverkürzung, Textverlängerung. Dazu stehen ihm graphische Werkzeuge zur Verfügung, die hier nicht beschrieben werden.

Die Dateneingabe beim Programm "Layouten" erfolgt somit über die Listen ELLIST und TYPLIST sowie über die Positionsmatrix PM und die Liste SEITLAYOUT.

Die Datenausgabe erfolgt zu den Listen ELLIST und SEITLAYOUT.

Mit dem Programm LERNEN wird die SEITLAYOUTliste hinsichtlich Elementtyp und Position ausgewertet, danach wird die Positionsmatrix PM aktualisiert.

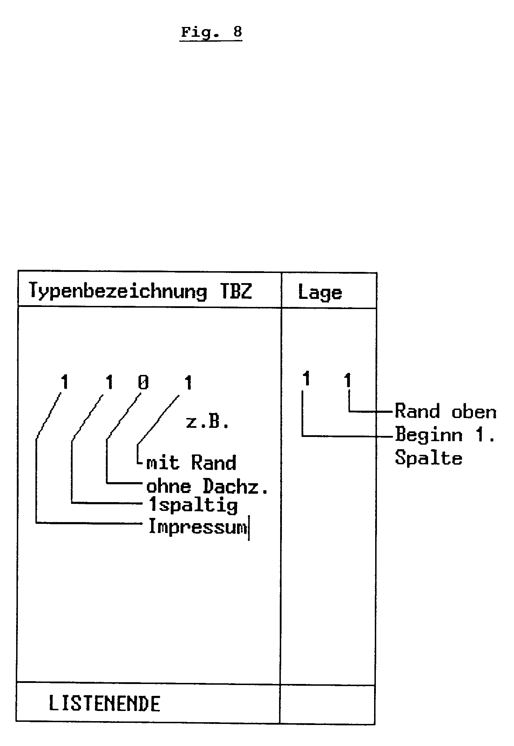

In Fig. 8 ist der Aufbau der Liste SDARB gezeigt, die die Typenbezeichnung TBZ und Kennungen für die Lage der einzelnen Elemente beinhaltet. Die Daten werden vom Benutzer über ein Editorstandardprogramm eingegeben. Bzgl. des Aufbaus der Typenbezeichnung TBZ wird auf die Kriterienliste gemäß Fig. 2 verwiesen.

In Fig. 9 ist der Aufbau der Typenliste TYPLIST dargestellt. Die Typenliste beinhaltet in der linken Spalte Angaben über den laufenden sowie den zuletzt vergebenen Index und in der rechten Spalte den zum jeweiligen Index gehörenden Typenbezeichner. Der Zugriff findet von den Programmen GENERIEREN, schreiben, und LADEN, schreiben, statt.

Die Positionsmatrix PM ist dreidimensional aufgebaut, d.h. die einzelnen Matrixpositionen werden durch die Indizes PM i, j, K beschrieben.

Der Index i = 1, ..., 5 bezeichnet den Spaltenauftrag (x Position), z.B. i = 1: Das Element beginnt in der Spalte 1 (siehe Kriterien für die Elementlage gemäß Fig. 3).

Der Index j = 1, ..., 4 beschreibt die y-Position, z.B. j = 1: das Element steht am oberen Rand (siehe Kriterien für die Elementlage gemäß Fig. 3).

Der Index K = 1, m repräsentiert die Elementtype. K entspricht dem Index in der Typenliste. Der Index repräsentiert einen bestimmten Typ.

Beträgt z.B. der Wert des Matrizenelements PM1,1,3 = 40, so besagt dies: Das Element mit dem Index 3 (Type 3) stand 40 mal in der 1. Spalte am oberen Rand.

Der Zugriff zur Positionsmatrix erfolgt durch die Programme "GENERIEREN (schreiben), "LERNEN" (schreiben) und "LAYOUTEN" (lesen).

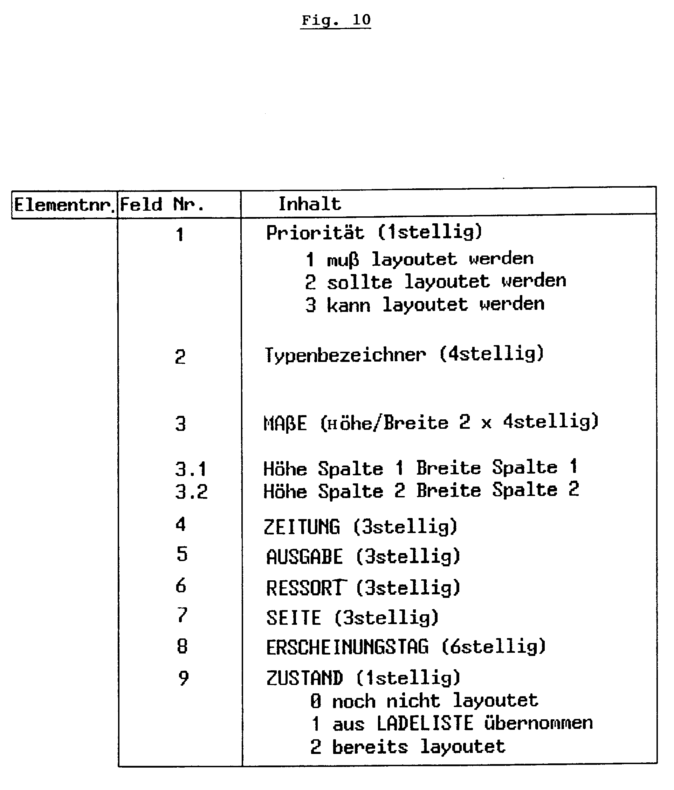

In Fig. 10 ist der Aufbau der Ladeliste dargestellt. Für jedes zu layoutende Element existiert ein Datensatz, der von einem Subsystem erstellt wird. Jeder Datensatz besteht aus mehreren Feldern mit jeweils zugeordnetem elementspezifischem Inhalt.

Das Feld 1 stellt die Priorität (1stellig) des Elements dar, d.h. gibt an, ob dieses layoutet werden muß (1), layoutet werden sollte (2) oder layoutet werden kann (3).

Das Feld 2 beinhaltet den Typenbezeichner (4stellig), dessen Aufbau der Kriterienliste gemäß Fig. 2 entspricht.

Der Inhalt der Felder 3 bis 9 repräsentiert Maße (Höhe/Breite 2 x 4stellig); Höhe Spalte 1, Breite Spalte 1, Höhe Spalte 2, Breite Spalte 2; Zeitung (3stellig); Ausgabe (3stellig); Ressort (3stellig); Seite (3stellig); Erscheinungstag (6stellig) und Zustand (lstellig), wobei "0" noch nicht layoutet, "1" aus Ladeliste übernommen und "2" bereits layoutet bedeuten. Der Zugriff zur Ladeliste erfolgt vom Programm "LADEN" (schreiben).

Der Aufbau der Elementliste ELLIST entspricht dem der LADELISTE. Der Zugriff erfolgt von den Programmen "LADEN" (schreiben) und "LAYOUTEN" (lesen, schreiben).

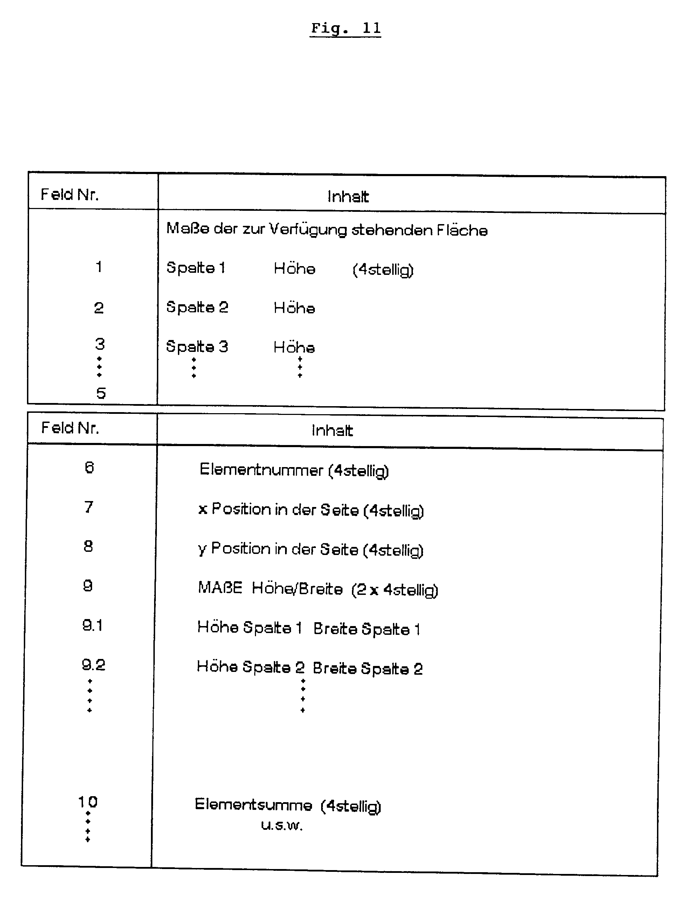

Fig. 11 gibt den Aufbau der Seitenlayoutliste SEITLAYOUT wieder. In den Feldern Nr. 1 bis 5 stehen die Maße der zur Verfügung stehenden Fläche, während die Felder 6 bis 10 usw. die Elementnummer (4stellig), die x-Position in der Seite (4stellig), die y-Position in der Seite (4stellig). die Maße Höhe/Breite (2 x 4stellig), die Höhen und Breiten der einzelnen Spalten, die Elementsumme (4stellig) usw. angeben.

In der vorstehenden Beschreibung sind die in den Fig. 5 bis 7C gezeigten Programmschritte nicht im einzelnen wiederholt, da die Programmschritte in den Fig. 5 bis 7C jeweils mit den zugehörigen Beschreibungen versehen sind. Die in diesen sowie den weiteren Figuren enthaltenen Beschriftungen werden hiermit aber ausdrücklich zum Bestandteil vorliegender Beschreibung deklariert und stellen einen Bestandteil der erfindungswesentlichen Offenbarung dar.

Mit dem beschriebenen Verfahren und Gerät kann ein Layout in einfacher und rascher Weise erstellt werden, indem eingegebene Kenngrößen über die auf der zu gestaltenden Seite anzuordnenden Informationsblöcke mit internen gespeicherten Daten, die aus bereits erstellten Layouts gebildet sind, verglichen werden und hieraus Positionsinformationen für die Positionierung der Informationsblöcke auf der zu gestaltenden Seite gewonnen werden.

## Patentansprüche

1. Verfahren zur automatischen Erstellung eines Layouts einer zu gestaltenden Seite, dadurch gekennzeichnet, daß die in Form charakteristischer Kenngrößen eingegebenen Elemente der zu gestaltenden Seite mit gespeicherten, aus mehreren Layouts vorab gewonnenen charakteristischen Kenngrößen verglichen werden, und daß abhängig vom Vergleichsergebnis ein Layout erstellt wird, in dem die Elemente entsprechend der Häufigkeit ihrer Anordnung in den zur Gewinnung der gespeicherten charakteristischen Kenngrößen ausgewerteten Layouts auf der zu gestaltenden Seite positioniert sind.

2. Verfahren nach Anspruch 1, dadurch gekennzeichnet, daß das erstellte Layout angezeigt wird.

3. Verfahren nach Anspruch 1 oder 2, dadurch gekennzeichnet, daß bei Eingabe eines Bestätigungsbefehls seitens des Benutzers nach Erstellung des Layouts die charakteristischen Kenngrößen dieses erstellten Layouts gleichfalls für spätere Vergleiche mit dann zu erstellenden Layouts gespeichert werden.

4. Verfahren nach einem der vorhergehenden Ansprüche, dadurch gekennzeichnet, daß die charakteristischen Kenngrößen den Typus des jeweiligen Elements beinhalten und insbesondere repräsentieren, ob es sich bei dem jeweiligen Element um einen Textartikel, um eine Anzeige oder um ein Bild handelt.

5. Verfahren nach Anspruch 4, dadurch gekennzeichnet, daß zusätzlich zu den gespeicherten charakteristischen Kenngrößen Positionsinformationen gespeichert sind, die die Häufigkeit des Auftretens eines jeweiligen Elementtyps an einer bestimmten Stelle der Seite beinhalten.

6. Verfahren nach Anspruch 5, dadurch gekennzeichnet, daß die Elemente der zu gestaltenden Seiten abhängig von ihren eingegebenen charakteristischen Kenngrößen so positioniert werden, daß sie an der Stelle der gespeicherten maximalen Häufigkeit des Auftretens dieses Elements zu liegen kommen.

7. Verfahren nach Anspruch 6, dadurch gekennzeichnet, daß vor jeder Positionierung des jeweils betrachteten Elements überprüft wird, ob die ausgewählte Position in der zu gestaltenden Seite noch frei ist, und daß dann, wenn festgestellt wird, daß die ausgewählte Position bereits belegt ist, stattdessen diejenige Position bestimmt wird, bei der das betreffende Element die zweithöchste Häufigkeit seines Auftretens besitzt, und, falls auch diese Position in der zu gestaltenden Seite bereits belegt sein sollte, diejenige Position belegt wird, die in der zu gestaltenden Seite noch frei ist und von den freien Positionen die höchste Häufigkeit des Auftretens des Elements an dieser Stelle besitzt.

8. Gerät zur automatischen Erstellung eines Layouts einer zu gestaltenden Seite, mit einer Eingabeeinrichtung (1), über die charakteristische Kenngrößen der auf der zu gestaltenden Seite anzuordnenden Elemente eingebbar sind, mit einem Verarbeitungsabschnitt (2), der abhängig vom Vergleichsergebnis zwischen den eingegebenen Kenngrößen und den in einem Speicher (3) gespeicherten Kenngrößen bereits erstellter Layouts den Ort der maximalen Auftrittshäufigkeit des jeweiligen Elements ermittelt, um damit die räumliche Anordnung der eingegebenen Elemente auf der zu gestaltenden Seite zu bestimmen.

9. Gerät nach Anspruch 8, gekennzeichnet durch einen Anzeigeabschnitt (4), auf dem das durch den Verarbeitungsabschnitt (2) erstellte Layout anzeigbar ist.

10. Gerät nach Anspruch 8 oder 9, dadurch gekennzeichnet, daß der Speicher (3) eine dreidimensionale Positionsmatrix (PM) speichert, in der für jede Position der Seite und für jeden durch die charakteristischen Kenngrößen der Elemente charakterisierten Typus der Elemente die Häufigkeit des Auftretens des jeweiligen Typs an der jeweiligen Position, bezogen auf die bislang ausgewerteten Layouts, gespeichert sind.

11. Gerät nach einem der Ansprüche 8 bis 10, dadurch gekennzeichnet, daß der Verarbeitungsabschnitt (2) abhängig von den eingegebenen, für den Typ des jeweils zu positionierenden Elements charakteristischen Kenngrößen den Inhalt des Speichers (3) hinsichtlich des Orts der maximalen Häufigkeit des Auftretens dieses Elementtyps überprüft und das betreffende Element an derjenigen Stelle der zu gestaltenden Seite positioniert, an der die maximale Auftrittshäufigkeit ermittelt wurde.

12. Gerät nach Anspruch 11, dadurch gekennzeichnet, daß der Verarbeitungsabschnitt (2) vor Positionierung des Elements an der Stelle von dessen maximaler Auftrittshäufigkeit überprüft, ob die betreffende Position in der zu gestaltenden Seite noch frei ist und, wenn dies der Fall ist, das Element an der betreffenden Position anordnet, während er bei Ermittlung, daß die betreffende Position bereits durch ein anderes Element besetzt ist, die zweithöchste Häufigkeit des Auftretens des betreffenden Elementtyps ermittelt, überprüft, ob diese Position in der zu gestaltenden Seite noch frei ist und, wenn dies der Fall ist, das Element an dieser Position anordnet, während er bei Belegtsein auch dieser Position das Element an derjenigen Stelle der zu gestaltenden Seite anordnet, die in der zu gestaltenden Seite noch frei ist und von allen freien Stellen die höchste Auftrittshäufigkeit des betreffenden Elements besitzt.

13. Gerät nach einem der Ansprüche 8 bis 12, dadurch gekennzeichnet, daß die charakteristischen Kenngrößen zusätzlich Kenndaten enthalten, die darstellen, ob das betreffende Element auf der zu gestaltenden Seite anzuordnen ist, angeordnet werden sollte oder angeordnet werden kann und daß der Verarbeitungsabschnitt (2) nach Anordnung aller Elemente, die angeordnet werden müssen, auf der zu gestaltenden Seite diejenigen Elemente, die angeordnet werden sollten, auf der zu gestaltenden Seite positioniert, soweit dies möglich ist, und, falls auch alle Elemente, die angeordnet werden sollten, auf der zu gestaltenden Seite untergebracht sind, auch diejenigen Elemente, die angeordnet werden können, auf der zu gestaltenden Seite, soweit möglich, positioniert.

## Claims

1. Method for the automatic production of a layout of a page which is to be designed, characterized in that the elements of the page which is to be designed, which are input in the form of characteristic parameters, are compared with stored characteristic parameters previously obtained from a plurality of layouts, and in that a layout is produced as a function of the result of the comparison, in which layout the elements are positioned on the page which is to be designed in accordance with the frequency of their arrangement in the layouts analysed in order to obtain the stored characteristic parameters.

2. Method according to Claim 1, characterized in that the produced layout is displayed.

3. Method according to Claim 1 or 2, characterized in that, when a confirmation command is input by the user after production of the layout, the characteristic parameters of this produced layout are likewise stored for later comparisons with layouts to be produced at that time.

4. Method according to one of the preceding claims, characterized in that the characteristic parameters contain the type of the respective element and, in particular, indicate whether the respective element is a text article, an advertisement or an illustration.

5. Method according to Claim 4, characterized in that, in addition to the stored characteristic parameters, positional information is stored which includes the frequency of the occurrence of a respective type of element at a particular point in the page.

6. Method according to Claim 5, characterized in that the elements of the pages which are to be designed are positioned as a function of their input characteristic parameters so that they come to be situated at the point of the stored maximum frequency of the occurrence of this element.

7. Method according to Claim 6, characterized in that, before each positioning of the respective element under consideration, a check is carried out to ascertain whether the selected position in the page which is to be designed is still free, and in that when it is established that the selected position is already occupied, instead of that position, the position is determined in which the element in question has the second highest frequency of its occurrence and, if this position should also be already occupied in the page which is to be designed, the position occupied is that which, still being free in the page which is to be designed, possesses the highest frequency of occurrence of the element at that point among the free positions.

8. Device for the automatic production of a layout of a page which is to be designed, having an input device (1), via which characteristic parameters of the elements to be arranged on the page which is to be designed can be input, having a processing section (2), which determines, as a function of the result of the comparison between the input parameters and the parameters of layouts already produced, these parameters being stored in a memory (3), the position of maximum frequency of occurrence of the respective element, in order thus to determine the spatial arrangement of the input elements on the page which is to be designed.

9. Device according to Claim 8, characterized by a display section (4) on which the layout produced by the processing section (2) can be displayed.

10. Device according to Claim 8 or 9, characterized in that the memory (3) stores a three-dimensional position matrix (PM), in which, for each position of the page and for each type of the elements characterized by the characteristic parameters of the elements, the frequency of occurrence of the respective type at the respective position are (sic) stored with reference to the layouts previously analysed.

11. Device according to one of Claims 8 to 10, characterized in that the processing section (2), as a function of the input parameters which are characteristic for the type of the respective element to be positioned, checks the content of the memory (3) with reference to the place of maximum frequency of occurrence of this type of element and positions the element in question at that point in the page which is to be designed at which the maximum frequency of occurence has been determined.

12. Device according to Claim 11, characterized in that the processing section (2) before positioning the element at the point of its maximum frequency of occurrence, checks whether the position in question is still free in the page which is to be designed and, if this is the case, arranges the element at the position in question, whereas, on determining that the position in question is already occupied by another element, it determines the second highest frequency of occurrence of the type of element in question, checks whether this position is still free in the page which is to be designed and, if this is the case, arranges the element at this position, whereas, in the event of the occupancy of this position also, it arranges the element at that point in the page which is to be designed which is still free in the page which is to be designed and possesses the highest frequency of occurrence of the element in question among all the free points.

13. Device according to one of Claims 8 to 12, characterized in that the characteristic parameters additionally contain identifying data which indicate whether the element in question is to be arranged, should be arranged or can be arranged on the page which is to be designed, and in that the processing section (2), after arranging on the page which is to be designed all the elements which must be arranged, positions on the page which is to be designed those elements which should be arranged, in so far as this is possible, and if all elements which should be arranged are accommodated on the page which is to be designed, also positions those elements which can be arranged on the page which is to be designed, as far as possible.

## Revendications

1. Procédé pour la génération automatique d'une présentation d'une page à configurer, ou mise en page, caractérisé en ce que les éléments de la page à configurer, introduits sous forme de grandeurs caractéristiques, sont comparés à des grandeurs caractéristiques mémorisées, ayant été obtenues auparavant à partir de plusieurs mises en page et une mise en page étant générée en fonction du résultat de la comparaison, mise en page dans laquelle les éléments sont positionnés sur la page configurée en fonction de la fréquence de l'occurrence de leur disposition dans les mises en page ayant subi une évaluation, en vue de l'obtention des grandeurs caractéristiques mémorisées.

2. Procédé selon la revendication 1, caractérisé en ce que la mise en page générée est affichée.

3. Procédé selon la revendication 1 ou 2, caractérisé en ce que, lors de l'introduction d'un ordre d'actionnement de la part de l'opérateur, après génération de la mise en page, les grandeurs caractéristiques de cette mise en page générée sont également mémorisées pour servir à des comparaisons ultérieures à des mises en page à générer alors.

4. Procédé selon l'une des revendications précédentes, caractérisé en ce que les grandeurs caractéristiques contiennent le type de l'élément spécifique et, en particulier, sont représentatives du fait qu'il s'agit, concernant l'élément spécifique, d'un article de texte, d'une annonce ou d'une image.

5. Procédé selon la revendication 4, caractérisé en ce qu'en plus des grandeurs caractéristiques mémorisées sont mémorisées des informations de position, contenant la fréquence de l'apparition d'un élément type spécifique à un endroit déterminé de la page.

6. Procédé selon la revendication 5, caractérisé en ce que les éléments des pages à configurer sont positionnés, en fonction de leurs grandeurs caractéristiques introduites, de telle façon qu'ils viennent se placer à l'endroit de la fréquence d'apparition maximale de cet élément.

7. Procédé selon la revendication 6, caractérisé en ce qu'avant tout positionnement de l'élément chaque fois considéré, il est vérifié si la position sélectionnée dans la page à configurer est encore libre et s'il est constaté que la position sélectionnée est déjà occupée, on détermine au lieu de cela la position pour laquelle l'élément concerné a une fréquence maximale d'occurrence double et, dans le cas où cette position serait déjà occupée dans la page à configurer, on procède à l'occupation de la position encore libre dans la page à configurer et comportant la fréquence d'occurrence maximale de l'élément à cet endroit, parmi les position libres.

8. Appareil pour la génération automatique d'une présentation d'une page à configurer, ou mise en page, avec un dispositif d'introduction (1), par l'intermédiaire duquel les grandeurs caractéristiques des éléments à disposer sur la page à configurer peuvent être introduits, avec une section de traitement (2), déterminant, indépendamment du résultat de comparaison entre les grandeurs caractéristiques introduites et les grandeurs caractéristiques, mémorisées dans une mémoire (3), de mises en page déjà générées, le lieu de la fréquence d'occurrence maximale de l'élément spécifique, pour déterminer ainsi l'agencement spatial des éléments introduits sur la page à configurer.

9. Appareil selon la revendication 8, caractérisé par une section d'affichage (4), sur laquelle la mise en page générée par la section de traitement (2) peut être affichée.

10. Appareil selon la revendication 8 ou 9, caractérisé en ce que la mémoire (3) stocke une matrice de position (PM) tridimensionnelle, dans laquelle pour chaque position de la page et pour chaque type des éléments, caractérisé par les grandeurs caractéristiques des éléments, sont mémorisées la fréquence d'occurrence du type spécifique à la position respective, en se référant aux mises en page exploitées jusque là.

11. Appareil selon l'une des revendications 8 à 10, caractérisé en ce que la section de traitement (2) contrôle, en fonction des grandeurs introduites, caractéristiques du type de chaque élément spécifique à positionner, le contenu de la mémoire (3), en ce qui concerne le lieu de l'occurrence maximale de l'apparition de ce type d'élément et positionne l'élément concerné à un endroit de la page à configurer où a été déterminée la fréquence d'occurrence maximale.

12. Appareil selon la revendication 11, caractérisé en ce que la section de traitement (2) contrôle, avant positionnement de l'élément à l'endroit de sa fréquence d'occurrence maximale, si la position concernée dans la page à configurer est encore libre et, dans l'affirmative, dispose l'élément à la position concernée, tandis que, dans le cas où il a été déterminé que la position concernée est déjà occupée par un autre élément, elle détermine la fréquence d'occurrence double de celle du type d'élément concerné, elle contrôle si cette position est encore libre dans la page à configurer, et, dans l'affirmative, elle dispose l'élément à cette position, tandis qu'en cas d'occupation de cette position également, elle dispose l'élément à un endroit de la page à configurer, encore libre dans la page à configurer et présentant parmi tous les autres endroits libres la fréquence d'occurrence maximale de l'élément concerné.

13. Appareil selon l'une des revendications 8 à 12, caractérisé en ce que les grandeurs caractéristiques contiennent des données caractéristiques supplémentaires, indicatives du fait que l'élément concerné est à disposer, devrait être disposé ou peut être disposé sur la page à configurer, et en ce que la section de traitement (2), après avoir procédé à la disposition de tous les éléments devant être disposés, positionne sur la page à configurer les éléments qui devraient être disposés, dans la mesure où cela est possible, et, dans le cas où également tous les éléments qui devraient être disposés sont logés sur la page à configurer, procède également à la disposition, dans la mesure du possible, des éléments pouvant être disposés.
